Europäisches Patentamt

**European Patent Office**

**Office européen des brevets**

(19)

(11) Veröffentlichungsnummer: **0 010 064**
**B1**

(12) **EUROPÄISCHE PATENTSCHRIFT**

(45) Veröffentlichungstag der Patentschrift:
16.06.82

(51) Int. Cl.³: **G 01 S 17/36,** G 01 S 7/48

(21) Anmeldenummer: **79810108.5**

(22) Anmeldetag: **28.09.79**

(54) Verfahren zur elektrooptischen Distanzmessung sowie Vorrichtung zur Durchführung des Verfahrens.

(30) Priorität: **11.10.78 CH 10573/78**

(43) Veröffentlichungstag der Anmeldung:
**16.04.80 Patentblatt 80/8**

(45) Bekanntmachung des Hinweises auf die Patenterteilung:
**16.06.82 Patentblatt 82/24**

(84) Benannte Vertragsstaaten:
**DE FR GB IT SE**

(56) Entgegenhaltungen:
**CH-A-596 559**
**DE-A-2 059 010**
**DE-B-2 139 001**
**FR-A-2 209 111**
**GB-A-1 115 214**
**US-A-4 024 540**
**US-A-4 025 193**
**US-A-4 077 718**

**ALTA FREQUENZA, vol. 41, No. 10,**
**Oktober 1972**
**MAILAND (IT)**
**R.H. BRADSELL: «Telemetry with**
**modulated beams short range high**
**resolution systems»,**
**Seiten 759–770.**

(73) Patentinhaber: **KERN & CO. AG Werke für**
**Präzisionsmechanik Optik und Elektronik,**
**CH-5001 Aarau (CH)**

(72) Erfinder: **Balmer, Beat, Juchstrasse 710,**
**CH-5726 Unterkulm (CH)**

(74) Vertreter: **Seeger, Jan, c/o Kern & Co. AG,**
**CH-5001 Aarau (CH)**

**COMPUTER, vol. 7, No. 8,**
**August 1974,**
**Long Beach (US)**
**R.J. CLARK: «A microprocessor**
**controlled electronic distance meter»,**
**Seiten 41–47**

**ELECTRONIC ENGINEERING, vol. 49,**
**No. 593, Juni 1977,**
**London (GB)**
**D. GOODFELLOW und J.R. GREENE:**
**«Electronic distance measuring»,**
**Seiten 51–53 und 55.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur elektrooptischen Distanzmessung, sowie Vorr᠁ ᠁ng zur Durchführung des Verfahrens

Die Erfindung betrifft ein Verfahren zur elektrooptischen Distanzmessung, bei dem kontinuierlich moduliertes Licht über die Messdistanz gesendet, wieder empfangen und in ein der Lichtmodulation entsprechendes elektrisches Signal umgesetzt wird, wobei dieses Signal mit dem zur Lichtmodulation verwendeten Signal als Referenz zeitlich verglichen, mindestens eines der Signale bis zum Erreichen einer vorgegebenen Zeitbeziehung zum anderen Signal verändert und aus der Grösse dieser Veränderung die Messdistanz bestimmt wird, sowie Vorrichtungen zur Durchführung des Verfahrens.

Das der elektrooptischen Streckmessung zugrundeliegende Prinzip beruht bekanntlich auf der elektrischen Messung der Laufzeit von Licht über die zu messende Strecke. Ist die Fortpflanzungsgeschwindigkeit des Lichtes bekannt, so ergibt sich die Messstrecke als Produkt von Laufzeit und Geschwindigkeit. Meistens werden Lichtsignale von dem einen Endpunkt der Messstrecke ausgesendet und vom anderen Endpunkt mit Hilfe eines Reflektors wieder an den Ausgangspunkt zurückgeführt. Zur Laufzeitmessung wird die ausgesandte Lichtwelle mit besonderen Merkmalen versehen. Bei den Impulsverfahren wird ein kurzes Signal (Impuls) ausgesendet und unmittelbar dessen Laufzeit gemessen. Bei den Phasenmessverfahren wird hingegen die Laufzeit einer kontinuierlich modulierten Welle nicht direkt, sondern aus der Phasenverschiebung zwischen der vom Reflektor zurückkehrenden Welle gegenüber der ausgesandten Welle bestimmt.

Zur Phasenmessung sind ebenfalls grundsätzlich zwei unterschiedliche Verfahren bekannt, nämlich die analogen und die digitalen. Bei den analogen legt man eine der zu untersuchenden Schwingungen an einen Phasenschieber, mit dem deren Phasendifferenz von der Referenzschwingung so lange verändert wird, bis sie einen bekannten festen Wert hat. Die dazu erforderliche Phasenänderung wird am Phasenschieber bestimmt. Insbesondere für hohe Modulationsfrequenzen um 500 MHz wurde bekanntlich als Phasenschieber schon eine koaxiale Verzögerungsleitung mit einstellbarer mechanischer Länge verwendet (CH-PS 596 559), deren Längenänderung ein sehr genaues Mass für die Phasenänderung darstellt. Eine derartige Leitung hat sich jedoch für den Gebrauch im Feld als nicht genügend miniaturisierbar erwiesen.

Andere bekannte Verfahren zur direkten Phasenmessung bei Messfrequenzen um 500 MHz weisen eine für Präzisionsmessungen ungenügende Genauigkeit auf. Zur Vermeidung dieser Schwierigkeiten hat man schon für Messfrequenzen bis ca. 15 MHz die hochfrequenten Schwingungen durch Überlagerung auf eine niedrigere Frequenz transponiert und die oben beschriebene Phasenschiebung und Phasenmessung an den transponierten Signalen durchgeführt (vgl. A.W. Kondraschkow: Elektrooptische Entfernungsmessung, Berlin, 1961, Seiten 173 ff). Die Genauigkeit dieses Verfahrens hat sich jedoch für Präzisionsentfernungsmessungen mit Messfrequenzen um 500 MHz ebenfalls als ungenügend erwiesen.

Gemäss «Elektronic Engineering, June 1977, Seiten 51–55» wurde bereits im Jahre 1954 durch Bjerhammar die Heterodyne- oder Überlagerungstechnik bei elektrooptischen Distanzmessgeräten eingeführt. Zur Messung der Phasendifferenz hochfrequenter Signale, welche die ausgesandte und wiederaufgenommene Lichtmodulation darstellen, wurden diese Signale mit dem Signal eines Lokal-Oszillators multiplikativ gemischt und die resultierenden unteren Seitenbänder oder Differenzfrequenzen ausgewertet. Dabei bleibt die Phasendifferenz der Signale im unteren Frequenzbereich für die Messung erhalten, so dass sich eine für die Auflösung sehr vorteilhafte Zeitdehnung ergibt.

Aufgabe der vorliegenden Erfindung ist es daher, ein Verfahren zur elektrooptischen Distanzmessung anzugeben, welches eine für Präzisionsmessungen hinreichende Genauigkeit aufweist und gleichzeitig eine für den Gebrauch ausreichende Miniaturisierung der Vorrichtungen zu seiner Durchführung erlaubt.

Gelöst wird diese Aufgabe bei einem Verfahren der eingangs genannten Art dadurch, dass das Referenzsignal in einem Regelkreis (20, 22, 23) bis zum Erreichen der vorgegebenen Phasenbeziehung zum gemessenen Signal in seinem zeitlichen Verlauf verschoben wird, dass das verschobene und das unverschobene Referenzsignal auf eine geringere Frequenz umgesetzt werden und dass die zeitliche Verschiebung des Referenzsignales durch den zeitlichen Unterschied der in ihrer Frequenz umgesetzten Signale gemessen wird.

Dabei ist es zweckmässig, wenn aus der Stärke des empfangenen modulierten Lichtes ein Signal abgeleitet wird, mit dem die Stärke des gesendeten modulierten Lichtes in einem Regelkreis derart gesteuert wird, dass die Stärke des empfangenen Lichtes einen für die Signalauswertung passenden Wert hat.

Eine Vorrichtung zur Durchführung des erfindungsgemässen Verfahrens mit einem Sender für kontinuierlich moduliertes Licht, einem Empfänger zur Umsetzung des modulierten Lichtes in ein elektrisches Messsignal, welches der Lichtmodulation entspricht, ferner mit Mitteln zum zeitlichen Vergleich des Messsignals mit einem von dem zur Modulation der Lichtquelle dienenden Signal abgeleiteten Referenzsignal, mit Mitteln zur messbaren Veränderung der zeitlichen Differenz zwischen Messsignal und Referenzsignal und Mitteln zur Bestimmung der Messdistanz aus der gemessenen zeitlichen Signaldifferenz ist gekennzeichnet durch einen an sich bekannten ersten doppeltbalancierten Mischer zum zeitlichen Vergleich von Messsignal und Referenzsignal, durch einen elektronischen Phasenschieber zur zeitlichen Verschiebung des Referenzsignales, durch einen Hilfsoszillator und je einen von diesem beaufschlagten doppelbalancierten Mischer zur Frequenzumsetzung des verschobenen und des unverschobenen Referenzsignals, sowie durch einen Phasenmesser für die frequenzumgesetzten Referenzsignale.

Bei dieser Vorrichtung ist mit Vorteil der elektronische Phasenschieber mit dem Ausgangssignal des ersten doppelbalancierten Mischers in einem Regelkreis verbunden. Auch ist die Vorrichtung zweckmässig ausgerüstet durch ein optisches Messwegsystem zur Führung des modulierten Lichtes von dem Sender über die Messstrecke zum Empfänger, ein optisches Kurzwegsystem zur Führung des modulierten Lichtes von dem Sender über eine bekannte Vergleichsstrecke zum Empfänger und optische Schaltmittel zum wechselweisen Öffnen des Messweges oder des Kurzweges.

Eine Ausführungsform ist dadurch gekennzeichnet, dass der Empfänger eine Si-Avalanche-Photodiode sowie temperaturempfindliche Mittel zur temperaturabhängigen Erzeugung der Diodenvorspannung umfasst. Eine andere Form zeichnet sich dadurch aus, dass der Empfänger eine Si-Avalanche-Photodiode umfasst sowie Mittel zur Regelung der Diodenvorspannung auf einen vorgegebenen Wert des Eigenrauschens im Diodenausgangssignal.

Der Sender umfasst zweckmässig einen Diodenlaser sowie Mittel zur temperaturabhängigen Einstellung, Begrenzung und Stabilisierung des Ruhestromes des Diodenlasers.

Weitere vorteilhafte Merkmale der erfindungsgemässen Vorrichtung sind in den Patentansprüchen 9 bis 17 gekennzeichnet.

Neben der aufgabengemässen Miniaturisierbarkeit weisen erfindungsgemässe Vorrichtungen noch den Vorteil auf, dass Distanzmessungen nach Auslösung bis zur Anzeige des Messwertes vollautomatisch erfolgen können.

Die Erfindung wird nachfolgend anhand eines in den Figuren der Zeichnung schematisch dargestellten Ausführungsbeispieles näher beschrieben. Es zeigen:

Fig. 1 ein Blockschema eines erfindungsgemässen Entfernungsmessers,

Fig. 2 den Regelkreis für einen elektrooptischen Phasenschieber gemäss Fig. 1,

Fig. 3 die Phasenmessschaltung für das phasenverschobene Referenzsignal,

Fig. 4 den Phasenmesser gemäss Fig. 3 im Einzelnen und

Fig. 5 einen Regler für die Zwischenfrequenz.

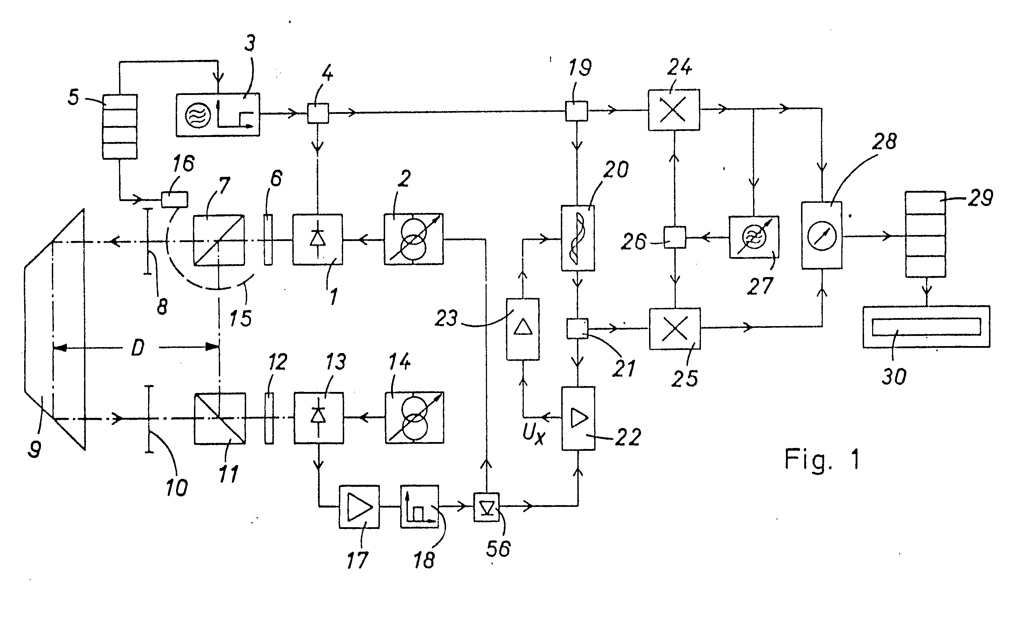

In Fig. 1 ist als Lichtsender eine GaAs-Laserdiode 1 dargestellt. Diese Laserdiode bezieht ihren Ruhestrom aus einer geregelten Gleichstromquelle 2 und ein Modulationssignal von einem parallel geschalteten Messfrequenzgenerator 3 über einen 1 : 1-Leistungsteiler 4. Der Messfrequenzgenerator 3 umfasst einen von einem Prozessor 5 gesteuerten Frequenzsynthesizer, aus dessen Grundfrequenz die 3. harmonische Schwingung als Messfrequenz ausgefiltert wird.

Die Laserdiode 1 emittiert amplitudenmoduliertes Infrarotlicht mit einer Wellenlänge von 820 nm über einen variablen Graukeil 6, ein Teilerprisma 7 und eine Senderoptik 8 auf die Messstrecke der Länge D.

Am anderen Ende der Messstrecke ist ein Reflektor 9 angeordnet, der den Senderstrahl seitwärts versetzt und parallel zurückreflektiert. Der reflektierte Messstrahl wird von einer Empfängeroptik 10 über ein zweites Teilerprisma 11 und ein Interferenzfilter 12 für 820 nm auf eine Si-Avalanche-Photodiode 13 als Empfänger fokussiert. Die Diode 13 wird von einer regelbaren Quelle 14 mit einer Vorspannung von etwa −150 V versorgt.

Zwischen den Teilerprismen 7 und 11 gelangt ein Teil des Lichtes der Diode 1 über einen optischen Kurzweg auf die Empfängerdiode 13. Eine Schaltblende 15, die über einen Antrieb 16 vom Prozessor 5 steuerbar ist, dient dazu, das Licht entweder nur für die Messstrecke (gezeichnete Stellung) oder nur für den Kurzweg freizugeben. Dadurch ist die Vorrichtung in an sich bekannter Weise durch eine Kurzwegmessung kalibrierbar, derart, dass sich die Messstrecke als Differenz D der optischen Wege zwischen den Teilungspunkten der Prismen 7, 11 und den Reflexionspunkten des Reflektors 9 ergibt.

Die Empfängerdiode 13 liefert als Ausgangssignal das Modulationssignal der Senderdiode 1 entsprechend der zweimal durchlaufenen Messstrecke der Länge 2D phasenverschoben. Dieses Ausgangssignal wird in einem der Diode 13 angeschlossenen Mikrowellenverstärker 17 verstärkt und durch ein Bandpassfilter 18 von störenden Signalkomponenten befreit. Es wird dann über einen Leistungsdetektor 56 abgezweigt, zur Steuerung der Gleichstromquelle 2 für die Messlichtstärke verwendet und steht ausserdem zusammen mit dem vom Leistungsteiler 4 abgezweigten Modulationssignal als Referenz zur Phasenbestimmung zur Verfügung.

Das Referenzsignal ist über einen Leistungsteiler 19, einen elektronischen Phasenschieber 20 und einen Leistungsteiler 21 einem Phasenkomparator 22 zugeführt, an dessen anderem Eingang das Messsignal vom Bandpassfilter 18 liegt. Im Phasenkomparator 22 entsteht eine zur Phasendifferenz minus 90° proportionale Ausgangsspannung, die über ein Regelglied 23 dem Steuereingang des Phasenschiebers 20 zugeführt ist. Die Signale an den Leistungsteilern 19, 21 weisen somit eine durch den Phasenregelkreis 20, 22, 23 bewirkte, zur doppelten Messdistanz 20 proportionale Phasenverschiebung auf.

Zur Messung dieser Phasenverschiebung werden die Signale in Mischern 24, 25 durch Mischung mit dem an einem Leistungsteiler 26 verzweigten Signal eines Hilfs-Hochfrequenzgenerators 27 auf eine niedrigere Zwischenfrequenz umgesetzt. Die Phasenverschiebung der Zwischenfrequenzsignale wird durch einen Phasenmesser 28 gemessen und im Speicher einer Recheneinrichtung 29 als Digitalwert gespeichert. Aus den Phasendifferenzen, welche sich bei der Programmsteuerung der Messfrequenzen am Generator 3 und der optischen Wege am Blendenantrieb 16 durch den Prozessor 5 nacheinander im Rechner 29 ergeben, berechnet dieser den Distanzmesswert und gibt ihn auf eine Anzeige 30. Bei dieser Rechnung werden von nicht mit dargestellten Sensoren erfasste Werte für Lufttemperatur, Luftdruck und Wasserdampfdruck in an sich bekannter Weise mitverrechnet.

Das erfindungsgemässe Kompensationsverfahren hat sich als besonders vorteilhaft erwiesen, weil trotz der Intensitäts- und Phasenschwankungen infolge starker Fluktuationen des Luftbrechungsindex längs des Messweges durch Mittelung eine hohe Genauigkeit erreicht werden kann. Die Phase des Referenzsignals am Leistungsteiler 21, welches die gleiche Frequenz wie das Messsignal am Ausgang des Bandpassfilters 18, jedoch konstante Amplitude aufweist, wird durch den Regelkreis 20, 22, 23 so weit verschoben, bis am Phasenkomparator 27 ein Nulldurchgang detektiert wird. Die benötigte Verschiebung ist ein direktes Mass für die Phasendifferenz zwischen dem Messsignal und dem Referenzsignal.

Der Phasenkomparator 22 ergibt am Ausgang eine Gleichspannung $u_x$, die proportional dem Produkt der Amplituden a, b und dem Kosinus der Phasendifferenz $\varphi$ der beiden Eingangssignale ist.

$$u_x = a \cdot b \cdot \cos \varphi \cdot$$

Das Referenzsignal wird im Phasenschieber 20 so verschoben, dass $\cos \varphi = 0$ ist. Dann detektiert der Phasenkomparator 22 Null Millivolt, unabhängig vom Amplitudenschwanken des Messsignals. Am Phasendetektor 22 tritt in diesem Fall die Phasendifferenz $\pm 90°$ zwischen Referenz- und Messwelle auf.

Im Hinblick auf die Messgenauigkeit stellt sich die Aufgabe, dass der Phasenkomparator die beiden zu vergleichenden Signale möglichst unverzerrt und fehlerfrei aufnehmen muss. Diese Aufgabe wird erfindungsgemäss dadurch gelöst, dass der Phasenkomparator 22 und der elektronische Phasenschieber 20 in Reihe direkt nacheinander verbunden werden und nur die Phasenmessung nach dem Frequenzmischen durch die Mischer 24, 25 vorgenommen wird. Sind dagegen Phasenkomparator 22 und Phasenschieber gemäss der eingangs erwähnten Lehre von A.W. Kondraschkow zwischen den beiden Frequenzmischern 24, 25 angeordnet, so muss der Phasenvergleich am Phasenkomparator 22 mit den bei 24, 25 resp. bei 24, 25 und 20 verzerrten Signalen vorgenommen werden.

Die Leistungsaufnahme der Laserdiode 1 aus dem Hochfrequenzoszillator 3 ist konstant, jedoch so gering, dass ohne einen Ruhestrom aus der Gleichstromquelle 2 kein messbares optisches Ausgangssignal entsteht. Mit Rücksicht auf eine möglichst hohe Lebensdauer der Laserdiode 1 wird dieser Ruhestrom so klein als möglich eingeregelt, und zwar unter Verwendung der Signalstärke des Messsignals aus dem Leistungsdetektor 56 (Typ Wavetek M 151) hinter dem Bandpassfilter 18. Es hat sich gezeigt, dass die Phasenlage des optischen Ausgangssignales der Diode 1 im Bereich üblicher Messzeiten (einige Sekunden) konstant ist. Das Frequenzspektrum der Phasenfluktuationen der Laserdiode 1 enthält also keine niederfrequenten, wohl aber hochfrequente Anteile. Dieser Konstanz gilt in allen Teilbereichen der Laserdiodenkennlinie, also für alle konstanten Werte des Ruhestromes I. Die Phasenlage ändert sich jedoch stark mit variierendem I. Während der Distanzmessung wird I daher erfindungsgemäss konstant gehalten.

Der Laserdioden-Regelkreis ist so eingerichtet, dass der Ruhestrom 1 (nach erfolgter Einregelung der Avalanche-Empfängerdiode 13) automatisch erhöht wird, bis der Mittelwert der Signalamplitude im Empfängerkanal 18 den zur Distanzmessung benötigten Wert erreicht hat. Nach Einregelung auf diesen Wert wird eine im Laserdioden-Regelkreis 2 vorgesehene Haltestufe (nicht gezeichnet) abgetrennt. Dann bleibt der eingeregelte Wert 1 während der gesamten Messung konstant. Um bei grossen Entfernungen (also kleinem Empfängersignal) ein Anwachsen von I weit über den Wert der Laserschwelle zu verhindern, ist der maximal mögliche Stromwert durch einen Vorwiderstand auf etwa $^6/_5$ des Schwellstromes begrenzt.

Vor dem Abtrennen der Haltestufe kann beim Anziehen des Reflektors 9 durch Einstellen minimaler I-Stromstärke mittels eines dazu vorgesehenen Ampèremeters (nicht gezeichnet) die beste Richtungseinstellung gefunden werden.

Bei der Referenzmessung über den optischen Kurzweg wird durch Einstellung des Graukeils 6 das Empfängersignal auf einen passenden Wert, z. B. den gleichen wie bei der Messwegmessung eingestellt. Ein dazu vorgesehenes Signalstärkemeter im Empfängerkanal 18 ist in Fig. 1 nicht dargestellt.

Die Grösse der Multiplikation M der Avalanche-Diode 13 wird mit der Diodenvorspannung an der regelbaren Quelle 14 eingestellt. Für kleine M überwiegt das Rauschen des Eingangsverstärkers 17 dasjenige der Diode 13 bei weitem, für wachsendes M wächst jedoch das Diodenrauschen stärker als das (multiplizierte) Nutz-Ausgangssignal. Deshalb wird M an der Quelle 14 so weit erhöht, bis die von der Diode 13 herrührende effektive Rauschspannung (am Ausgang des Verstärkers 17 gemessen) so gross ist, wie die effektive Rauschspannung des Verstärkers 17 selbst. Die Diodenvorspannung wird dann auf etwa 93% ihres vorher eingestellten Wertes abgesenkt. Die Phasenlage der Avalanchediode 13, d. h. der Phasenwinkel zwischen ihrem optischen Eingangs- und ihrem elektrischen Ausgangssignal, ist aber stark abhängig von M. Deshalb muss M während der Distanzmessung hinreichend konstant gehalten werden. Ausserdem ist M auf einen maximalen Wert von etwa 150 zu begrenzen (Vorspannung $-U \leq 165$ Volt), weil für grössere M die Phasenlage der Diode 13 zu stark abhängig von der Intensität ihres optischen Eingangssignales ist (unvermeidbare optische Intensitätsfluktuationen erzeugen dann durch starke Phasenfluktuationen zu grosse Messfehler).

Erfindungsgemäss erhöht deshalb ein in der Quelle 14 enthaltenes Regelsystem nach dem Einschalten des Gerätes bei abgeschaltetem Sender 1 die Avalanche-Multiplikation M durch Erhöhung der Diodenvorspannung automatisch, bis das Verhältnis der effektiven Rauschspannungen von Diode 13 und Verstärker 17 den oben genannten Wert annimmt. Dann wird eine weitere, in der Quelle 14 vorgesehene Haltestufe (nicht gezeichnet) abgetrennt, so dass der eingeregelte Multiplikationsfaktor M dann konstant bleibt. Dieser Vorgang wird zur Gewährleistung stets gleicher Betriebsbedingungen vor jeder neuen Messung wiederholt.

Es hat sich gezeigt, dass sich mit dem beschriebenen Regelsystem für die Avalanche-Diode 13 unter Umständen eine zu kleine Gesamtverstärkung für die Messfrequenzen ergibt, weil der Frequenzgang temperaturabhängig ist. Dieses Problem wird durch eine erfindungsgemässe Ausführungsform gelöst, bei der die Vorspannung der Avalanchediode 13 temperaturabhängig geregelt ist. Diese Form umfasst die Kombination einer temperaturempfindlichen Stromquelle mit einem Hochspannungsteil (nicht gezeichnet).

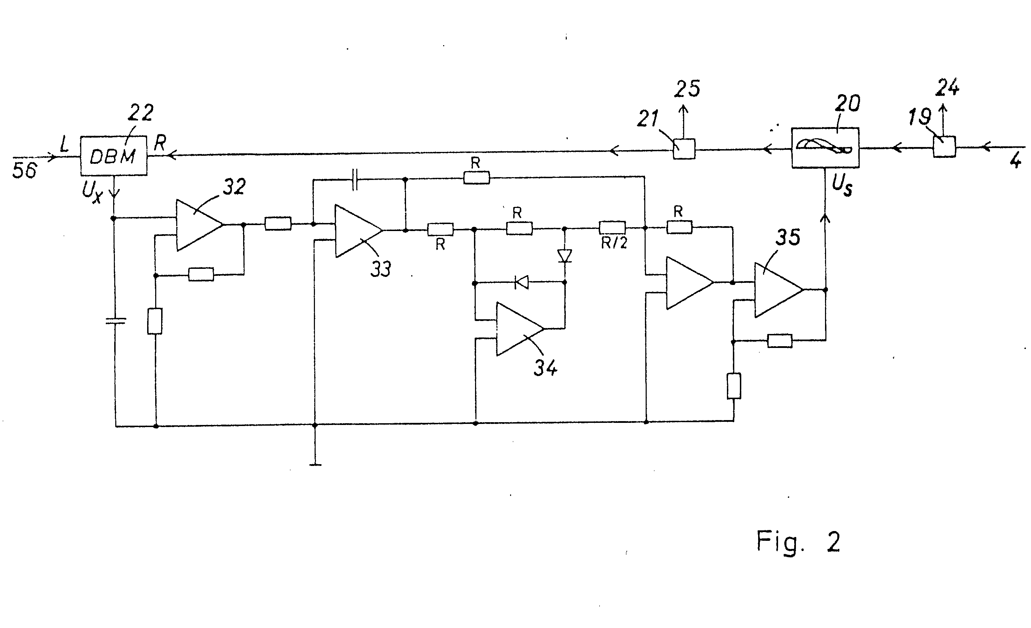

Fig. 2 zeigt den Regelkreis für den elektronischen Phasenschieber 20 gem. Fig. 1 im Einzelnen. Als Phasenkomparator 22 ist in an sich bekannter Weise (vg. CH-PS 596 559) ein doppelbalancierter Ringmischer vorgesehen. Derartige Mischer weisen bekanntlich ein L-Port und ein R-Port als Eingänge und ein x-Port als Ausgang auf. Liegt am L-Port ein Signal $u_L = a \cdot \sin \omega t$ und am R-Port $u_R = b \cdot \sin (\omega t + \vartheta)$, so ergibt sich am Ausgang ein Signal.

$$u_x = e + a \cdot b \cdot \cos \vartheta,$$

wobei e eine nur vom Bauelement abhängige Gleichspannung (Nullpunktsverschiebung, Offset) bedeutet, die durch Offsetkompensation eines nachfolgenden Verstärkers zu Null gemacht wird. Im Falle des abgestimmten Regelkreises ($\vartheta = 90°$) spielen die Amplituden a, b von Mess- und Referenzsignal keine Rolle, und somit sind auch die Amplitudenschwankungen kompensiert. Der Phasendetektor ist deshalb mit an den Mischer 22 anschliessendem DC-Verstärker 32 aufgebaut. Das Ausgangssignal $u_x$ des Mischers 22 wird dazu verwendet, den elektronischen Phasenschieber 20 so zu steuern, dass $u_x = 0$ wird.

Im Frequenzbereich bis 500 MHz werden elektronische Phasenschieber bekanntlich aus Varaktordioden und Hybridtransformern aufgebaut (vgl. Merrimac Typ EPSF- 3E-455). Die erforderliche Steuerspannung $u_s$ beträgt 0 bis + 20 V. Sie kann jedoch nicht direkt als Mass für die Phasenverschiebung benutzt werden, weil ihre Wirkung temperaturunabhängig ist (typ. $\pm 1/10 °C$).

Ein dem DC-Verstärker 32 nachgeschalteter Integrator 33 erhält die verstärkte $u_x$ als Eingangsspannung und erhöht daher seine Ausgangsspannung $u_a$ so lange, bis $u_x = 0$ ist. Da $u_a$ sowohl

positiv als auch negativ sein kann, bildet ein nachfolgender Absolutwertschalter 34 zur Anpassung an den Bereich der Steuerspannung $u_s$ von 0 bis + 20 V den Absolutwert $|u_a|$ und ein Multiplikator 35 passt ihn durch Verstärkung an:

$$u_s = V \cdot |u_a|, \quad (V \approx 2).$$

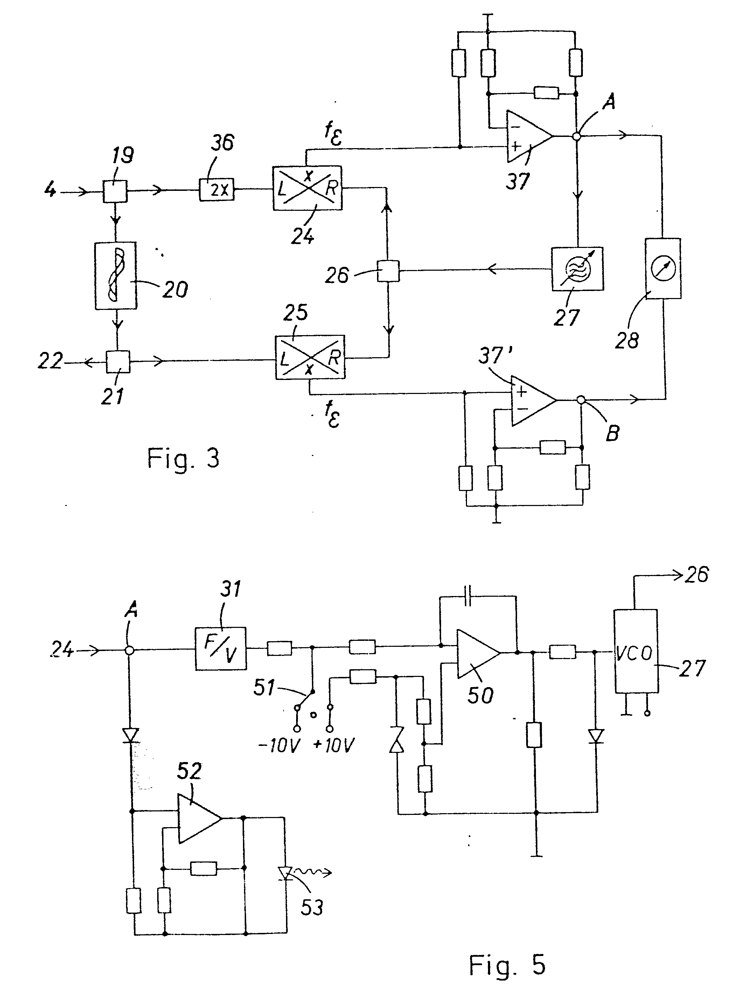

In Fig. 3 ist die Phasenmessregelung 24 bis 28 für das phasenverschobene Referenzsignal im Einzelnen dargestellt. Am Eingang und Ausgang des Phasenschiebers 20 stehen sinusförmige Signale zur Verfügung, deren Phasendifferenz gemessen wird. Zu diesem Zweck wird an den Signalen eine Frequenztransformation (zu Werten < 1 MHz) vorgenommen, welche die Phasenlage ungestört überträgt. Dies geschieht erfindungsgemäss durch Verwendung zweier doppeltbalancierter Ringmischer 24, 25 als Frequenzmischer. Damit an den L- und R-Eingängen dieser Mischer jeweils gleich grosse Signalleistungen anliegen, ist für das vom Messfrequenzoszillator 3 kommende Referenzsignal noch ein 2fach-Abschwächer 36 vorgesehen. Die an den X-Port-Ausgängen der Mischer 24, 25 auftretende (niedrigere) Zwischenfrequenz $f_\varepsilon$ wird weiter verarbeitet, die ebenfalls auftretende Summenfrequenz wird von einer anschliessenden Niederfrequenzschaltung 37, 37' vollständig unterdrückt.

Haben die Referenzsignale an den L-Eingängen der Mischer 24, 25 eine Frequenz f, so muss der Hilfsfrequenzoszillator 27 die Frequenz $f-f_\varepsilon$ erzeugen. Wichtig ist, dass diese Frequenz $f-f_\varepsilon$ spektral rein ist, d.h. der Oszillator 27 darf keine Nebenfrequenzen aussenden. Dieser Oszillator 27 wird deshalb erfindungsgemäss unabhängig vom Messfrequenzoszillator 3 betrieben. Die Frequenz $f-f_\varepsilon$ wird so gewählt, dass $f_\varepsilon$ etwa 100 kHz bis 200 kHz beträgt.

Zur automatischen Regelung der Zwischenfrequenz $f_\varepsilon$ ist erfindungsgemäss ein spannungsgesteuerter Hilfsoszillator 27 (VCO) eingesetzt.

Als Phasenmesser 28 können Bauelemente verwendet werden, welche bei der Zwischenfrequenz $f_\varepsilon$ (100–200 kHz) einen Phasenbereich > 180° und eine Absolutgenauigkeit von 0,36° (relativ ca. 1%oo) aufweisen.

Die Amplituden der beiden Zwischenfrequenzsignale betragen etwa 0,15 Vpp. Sie werden in den Schaltungen 37, 37' etwa 15fach verstärkt. Diese Schaltungen sind symmetrisch aufgebaut, um Temperatureinflüsse zu kompensieren. Die verstärkten Signale gelangen von den Punkten A, B auf den Phasenmesser.

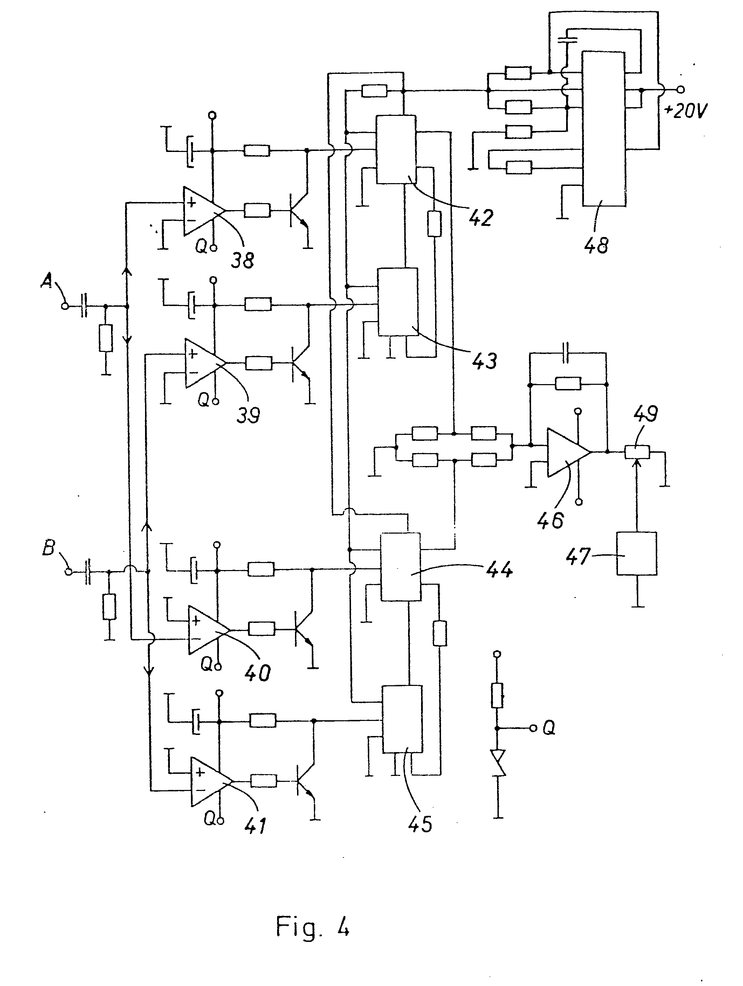

Der Phasenmesser 28 ist in Fig. 4 genauer dargestellt. Die Eingangssignale dieses Analogphasenmessers an den Klemmen A, B werden in Nullspannungskomparatoren 38, 39, 40, 41 zu Rechtecksignalen umgeformt und anschliessend in einer Schaltstufe 42, 43, 44, 45 zu Pulsen konstanter Amplitude und variabler Pulsbreite gewandelt. Die Phasendifferenz ist dieser Pulsbreite proportional, es entspricht 360° = 100% Pulsbreite.

Ein Integrator 46 wandelt das pulsbreitenmodulierte Signal in eine Gleichspannung um, die an einem Digitalvoltmeter 47 abgelesen werden kann.

An den Eingangssignalen (A, B) der Komparatoren 38, 39, 40, 41 treten kleine Konstantspannungen auf, die diese Signale bezüglich der Referenzspannung (Null mV) verschieben und somit ohne weiteres Messfehler ergeben würden. Deshalb ist die Schaltung zweikanalig aufgebaut: Der erste Kanal 38, 39 benützt die positiven Nulldurchgänge der Signale (A, B) als Schaltpunkte (+ Eingänge der Komparatoren 38, 39), der zweite Kanal 40, 41 die negativen Nulldurchgänge (− Eingänge der Komparatoren 40, 41). Hat eines der Signale (A, B) gegenüber dem anderen eine kleine Konstantspannungsverschiebung, so entstehen im ersten Kanal zu breite Pulse, im zweiten Kanal aber um denselben Betrag zu schmale Pulse. Im Integrator 46 werden die Pulsfolgen mit gleichem Vorzeichen integriert, die Summe beider Kanäle ist somit von DC-Komponenten der Eingangssignale (A, B) unabhängig.

Zur Verminderung der Temperaturdrift der Schaltung sind die Pulshöhen in den Schaltstufen 42, 43, 44, 45 durch eine Konstantspannungsquelle 48 (Typ SN 72 723) begrenzt. Der Integrator 46 ist ein low-drift-IC (Typ BB 3510). Die an ihm wirksamen Widerstände und Kondensatoren sind temperaturfest.

Ein Potentialteiler 49 am Ausgang des Integrators 46 dient der Wahl der Spannung (z. B. − 5 V), die einer Phasenverschiebung von 180° der Signale (A, B) entspricht.

Ein Regler für die Zwischenfrequenz der Signale (A, B) ist in Fig. 5 dargestellt. Er erzeugt die Steuerspannung für den spannungsgesteuerten Hilfsoszillator 27. Das Signal (A) wird in einem Frequenz-Spannungswandler 31 in ein DC-Signal umgesetzt, aus dem ein Integrator 50 als Feinregler die Steuerspannung für den Oszillator 27 bildet. Zur Grobeinstellung dient eine bipolare Stromquelle mit einem Wählschalter 51 in Verbindung mit einer Indikatorschaltung 52. Der Wählschalter 51 wird so lange betätigt, bis eine von der Indikatorschaltung gespeiste Leuchtdiode 53 anzeigt, dass die Zwischenfrequenz des Signals (A) kleiner als etwa 500 kHz ist. Anschliessend wird dann die Feinregelung durch den Integrator 50 wirksam.

**Patentansprüche**

1. Verfahren zur elektrooptischen Distanzmessung, bei dem kontinuierlich moduliertes Licht über die Messdistanz gesendet, wieder empfangen und in ein der Lichtmodulation entsprechendes elektrisches Signal umgesetzt wird, wobei dieses Signal mit dem zur Lichtmodulation verwendeten Signal als Referenz zeitlich verglichen, mindestens eines der Signale bis zum Erreichen einer vorgegebenen Phasenbeziehung zum anderen Signal verändert und aus der Grösse dieser Veränderung die Messdistanz bestimmt wird, dadurch gekennzeichnet, dass das Referenzsignal in einem Regelkreis (20, 22, 23) bis zum Erreichen der vorgegebenen Phasenbeziehung zum gemessenen Signal in seinem zeitlichen Verlauf verschoben wird, dass das verschobene und das unverschobene Referenzsignal auf eine geringere Frequenz umgesetzt werden und dass die zeitliche Verschiebung des Referenzsignales durch den zeitlichen Unterschied der in ihrer Frequenz umgesetzten Signale gemessen wird.

2. Verfahren nach Anspruch 1, dadurch gekennzeichnet, dass aus der Stärke des empfangenen modulierten Lichtes ein Signal abgeleitet wird, mit dem die Stärke des gesendeten modulierten Lichtes in einem Regelkreis (2) derart gesteuert wird, dass die Stärke des empfangenen Lichtes einen für die Signalauswertung passenden Wert hat.

3. Vorrichtung zur Durchführung des Verfahrens nach Anspruch 1 mit einem Sender (1) für kontinuierlich moduliertes Licht, einem Empfänger (13) zur Umsetzung des modulierten Lichtes in ein elektrisches gemessenes Signal, welches der Lichtmodulation entspricht, ferner mit Mitteln (22) zum zeitlichen Vergleich des gemessenen Signals mit einem von dem zur Modulation der Lichtquelle (1) dienenden Signal abgeleiteten Referenzsignal, mit Mitteln (20) zur messbaren Veränderung der zeitlichen Differenz zwischen Messsignal und Referenzsignal und Mitteln (28, 29, 30) zur Bestimmung der Messdistanz aus der gemessenen zeitlichen Signaldifferenz, gekennzeichnet durch einen an sich bekannten ersten doppeltbalancierten Mischer (22) als Phasenkomparator zwischen gemessenem Signal und Referenzsignal, durch einen elektronischen Phasenschieber (20) zur zeitlichen Verschiebung des Referenzsignales in einem Regelkreis (20, 22, 23), durch einen Hilfsoszillator (27) und je einem von diesem beaufschlagten doppeltbalancierten Mischer (24, 25) zur Frequenzumsetzung des verschobenen und des unverschobenen Referenzsignales, sowie durch einen Phasenmesser (28) für die frequenzumgesetzten Referenzsignale.

4. Vorrichtung nach Anspruch 3, gekennzeichnet durch ein optisches Messwegsystem (6 bis 12) zur Führung des modulierten Lichtes von dem Sender (1) über die Messstrecke zum Empfänger (13), ein optisches Kurzwegsystem (6, 7, 11, 12) zur Führung des modulierten Lichtes von dem Sender (1) über eine bekannte Vergleichsstrecke zum Empfänger (13) und optische Schaltmittel (15, 16) zum wechselweisen Öffnen des Messweges oder des Kurzweges.

5. Vorrichtung nach Anspruch 3, dadurch gekennzeichnet, dass der Empfänger eine Si-Avalanche-Photodiode (13) sowie temperaturempfindliche Mittel (14) zur temperaturabhängigen Erzeugung der Diodenvorspannung umfasst.

6. Vorrichtung nach Anspruch 3, dadurch gekennzeichnet, dass der Empfänger eine Si-Avalanche-Photodiode (13) umfasst sowie Mittel (14) zur Regelung der Diodenvorspannung auf einen vorgegebenen Wert des Eigenrauschens im Diodenausgangssignal.

7. Vorrichtung nach Anspruch 3, dadurch gekennzeichnet, dass der Sender einen Diodenlaser (1) umfasst sowie Mittel (2) zur temperaturabhängigen Einstellung, Begrenzung und Stabilisierung des Ruhestromes des Diodenlasers.

8. Vorrichtung nach Anspruch 7 zur Durchführung des Verfahrens nach Anspruch 2, gekennzeichnet durch einen Leistungsdetektor (56) im Empfängerkanal und eine vom Leistungsdetektor gespeiste Sample-Hold-Stufe, deren Ausgangssignal den Ruhestrom des Diodenlasers (1) steuert.

9. Vorrichtung nach Anspruch 3, gekennzeichnet durch einen Integrator (33), der mit dem Ausgangssignal des doppeltbalancierten Mischers (22) gespeist ist und einen Absolutwertschalter (34) zur Anpassung des integrierten Signales an den Steuerbereich des elektronischen Phasenschiebers (20).

10. Vorrichtung nach Anspruch 7, gekennzeichnet durch ein Interferenzfilter (12), welches an das schmale Emissionsband des Diodenlasers (1) angepasst und im optischen Strahlengang vor dem Empfänger (13) angeordnet ist.

11. Vorrichtung nach Anspruch 3, gekennzeichnet durch einen Graukeil (6), welcher zur Einstellung einer passenden Signalamplitude für den Empfänger (13) im optischen Strahlengang vor dem Sender (1) angeordnet ist.

12. Vorrichtung nach Anspruch 3, gekennzeichnet durch einen Frequenzsynthesizer (3) und eine Filterschaltung, welche aus der Grundfrequenz des Synthesizers eine harmonische Schwingung zur Modulation des Senders (1) ausfiltert.

13. Vorrichtung nach Anspruch 12, dadurch gekennzeichnet, dass Frequenzsynthesizer (3) und Filterschaltung eine Folge von verschiedenen Modulationsfrequenzen im Mikrowellenbereich (insbesondere um 450 MHz) erzeugen.

14. Vorrichtung nach Anspruch 13, dadurch gekennzeichnet, dass der Hilfsoszillator (27) zur Frequenzumsetzung steuerbar und in einem Regelkreis (31, 50, 51) derart angeordnet ist, dass sich für die verschiedenen Modulationsfrequenzen stets frequenzumgesetzte Referenzsignale einer und derselben Frequenz ergeben.

15. Vorrichtung nach Anspruch 13, dadurch gekennzeichnet, dass die Mittel zur Bestimmung der Messdistanz eine Recheneinrichtung (29) umfassen, mit der aus den Messwerten des Phasenmessers (28) für die verschiedene Modulationsfrequenzen und Messwerten für Temperatur, Luftdruck und Wasserdampfdruck die Messdistanz berechnet werden kann.

16. Vorrichtung nach einem der Ansprüche 4, 13 oder 15, dadurch gekennzeichnet, dass die Mittel (5, 29) zur Bestimmung der Messdistanz derart ausgebildet und dazu bestimmt sind, dass mit ihrer Hilfe durch die optischen Schaltmittel (15, 16) das optische Kurzwegsystem geöffnet, mittels des Frequenzsynthesizers (3) eine Modulationsfrequenz eingestellt, mittels des Phasenmessers (28) die zeitliche Differenz zwischen gemessenem Signal und Referenzsignal registriert, dieser Vorgang für das Messwegsystem und anschliessend mit den weiteren Modulationsfrequenzen für Kurz- und Messwegsystem wiederholt und mittels der Recheneinrichtung (29) aus den registrierten zeitlichen Signaldifferenzen die Messdistanz bestimmt werden kann.

## Claims

1. Method for electrooptical distance measurement, whereby continuously modulated light is transmitted over the measured distance, then received and converted into an electric signal corresponding to the light modulation, said signal being compared temporally with a reference signal employed for light modulation, at least one of the signals being modified until a given phase relation to the other signal is achieved, and the measured distance being found from the extent of said modification, thereby characterized, that the temporal position of the reference signal is shifted by means of a control circuit (20, 22, 23) until the given phase relation to the measured signal is reached, that the reference signals are converted to a lower frequency respectively before and after shifting and that the amount of temporal shift of the reference signal is measured by the temporal difference of the frequency-converted signals.

2. Method according to claim 1, thereby characterized that from the strength of the received modulated light a signal is derived, by means of which the strength of the transmitted modulated light is controlled in a control circuit (2) in such a way that the received light strength has a value convenient for signal evaluation.

3. Apparatus for carrying out the method according to claim 1 with a transmitter means (1) for continuously modulated light, a receiver means (13) for conversion of the modulated light into an electric measured signal corresponding to the light modulation, as well as means (22) for temporal comparison of the measured signal with a reference signal derived from the signal employed for modulation of the light source (1), means (20) for changing, in a way controlled by measurement, the temporal difference between measured signal and reference signal and means (28, 29, 30) for obtaining the measured distance from said measured temporal signal difference, characterized by a known first double balanced mixer (22) used as a phase comparator for measured signal and reference signal, an electronic phase shifter (20) for time-shifting the preference signal by means of a control circuit (20, 22, 23), an auxiliary oscillator (27) and respectively one double balanced mixer (24, 25) fed by said oscillator (27) for frequency conversion of the shifted and the unshifted reference signals, as well as by a phase meter (28) for the frequency converted reference signals.

4. Apparatus according to claim 3, characterized by an optical system (6 to 12) for the measured path for conducting the modulated light from the transmitter (1) over the measured line to the receiver (13), an optical system (6, 7, 11, 12) for a short path for conducting the modulated light from the transmitter (1) over a known reference line to the receiver (13) and by optical switching means (15, 16) for alternatively clearing the measured path and the short path.

5. Apparatus according to claim 3, characterized by a receiver comprising a silica avalanche photodiode (13) as well as temperature sensitive means (14) for generation of a diode bias voltage dependent upon temperature.

6. Apparatus according to claim 3, characterized by a receiver comprising a silica avalanche photodiode (13) as well as means (14) for generation of a diode bias voltage controlled to a given level of intrinsic noise of the diode output.

7. Apparatus according to claim 3, characterized by a transmitter means comprising a diode laser (1) as well as means (2) for temperature dependent setting, limiting and stabilizing the diode laser bias current.

8. Apparatus according to claim 7 for carrying out the method according to claim 2, characterized by a power detector (56) inserted in the receiver chanel and a sample hold stage fed by the power detector, the diode laser (1) bias current being controlled by the sample hold stage output.

9. Apparatus according to claim 3, characterized by an integrator stage (33) fed by the double balanced mixer (22) output, and a stage (34) forming an absolute value for matching the integrated signal to the input range of the electronic phase shifter (20).

10. Apparatus according to claim 7, characterized by an interference filter (12) matched to the narrow emission band of the diode laser (1) and inserted into the optical path in front of the receiver means (13).

11. Apparatus according to claim 3, characterized by a gray wedge (6) inserted into the optical path in front of the transmitter means (1) for setting a signal amplitude convenient for the receiver means (13).

12. Apparatus according to claim 3, characterized by a frequency synthesizer (3) and a filter circuit for filtering a harmonic oscillation from the fundamental component of the synthesizer for modulation of the transmitter means (1).

13. Apparatus according to claim 12, characterized by a frequency synthesizer (3) and a filter circuit generating a set of mutually differing modulation frequencies within the microwave range (especially about 450 MHz).

14. Apparatus according to claim 13, characterized by a frequency controllable auxiliary oscillator (27) arranged in a control circuit (31, 50, 51) for frequency conversion in such a way that frequency converted reference signals of one and only one frequency are generated for each of the different modulation frequencies.

15. Apparatus according to claim 13, characterized by means for obtaining the measured distance comprising a computer means (29) for computing from the measured values of the phase meter (28) for the various modulation frequencies as well as from measured values for temperature, air pressure and water vapour pressure the measured distance.

16. Apparatus according to one of claims 4, 13 or 15, characterized by means (5, 29) for obtaining the measured distance, made for clearing the optical short path by means of the optical switching means (15, 16), setting a modulation frequency by means of the frequency synthesizer (3), storing the temporal shift between measured signal and reference signal by means of the phase meter (28), repeating this process for the optical measured path and the successively with the remaining modulation frequencies of the set for the optical short and measured paths and for obtaining the measured distance from the stores temporal signal shifts by means of the computer means (29).

**Revendications**

1. Procédé pour la mesure électro-optique de la distance dans lequel une lumière continuellement modulée est émise sur la distance à mesurer, reçue à nouveau et transformée en un signal électrique correspondant à la modulation de la lumière, ce signal étant comparé dans le temps au signal utilisé pour la modulation de la lumière, pris comme référence, au moins l'un des signaux étant modifié jusqu'à ce qu'on obtienne une relation temporelle prédéterminée par rapport à l'autre signal et la distance à mesurer étant déterminée à partir de la valeur de cette modification, caractérisé en ce que le signal de référence est décalé en phase, dans son évolution temporelle, par un circuit de réglage (20, 22, 23) jusqu'à ce qu'on ait obtenu la relation de phase prédéterminée par rapport au signal mesuré, en ce que le signal de référence décalé et le signal de référence non décalé sont convertis à une fréquence plus basse et en ce que le décalage temporel du signal de référence est mesuré par la différence dans le temps des signaux convertis en fréquence.

2. Procédé suivant la revendication 1, caractérisé en ce qu'à partir de l'intensité de la lumière modulée reçue, on produit un signal avec lequel l'intensité de la lumière modulée émise est commandée dans un circuit de réglage (2) de manière que l'intensité du signal reçue possède une valeure appropriée pour l'analyse du signal.

3. Dispositif pour la mise en œuvre du procédé suivant la revendication 1, possédant un émetteur (1) prévue pour une lumière continuellement modulée, un récepteur (13) prévu pour transformer la lumière modulée en un signal électrique mesuré qui correspond à la modulation de la lumière, en outre, des moyens (22) pour la comparaison dans le temps du signal mesuré avec un signal de référence dérivé du signal servant à la modulation de la source lumineuse (1), des moyens (20) pour modifier, de manière mesurable, la différence dans le temps entre le signal de mesure et le signal de référence et des moyens (28, 29, 30) pour déterminer la distance à mesurer à partir de la différence temporelle mesurée des signaux, caractérisé par un premier mélangeur à double équilibrage (22), connu en soi, pour la comparaison de phase entre le signal de mesure et le signal de référence, un décaleur électronique de phase (20) pour le décalage dans le temps du signal de référence dans un circuit de réglage (20, 22, 23), un oscillateur auxiliaire (27) et deux mélangeurs à double équilibrage (24, 25) attaqués par cet oscillateur, respectivement pour la conversion de fréquence du signal de référence décalé et du signal de référence non décalé, ainsi qu'un phasemètre (28) pour la mesure des signaux de référence convertis en fréquence.

4. Dispositif suivant la revendication 3, caractérisé par un système de trajet optique de mesure (6 à 12) prévu pour guider la lumière modulée de l'émetteur (1) au récepteur (13) en parcourant le trajet de mesure, un système de trajet optique court (6, 7, 11, 12) prévu pour guider la lumière modulée de l'émetteur (1) au récepteur (13) en parcourant un trajet de comparaison connu, et des moyens de commutation optique (15, 16) prévus pour passer alternativement du trajet de mesure au trajet court.

5. Dispositif suivant la revendication 3, caractérisé en ce que le récepteur comprend une photodiode à avalanche au Si (13) ainsi que des moyens (14) sensibles à la température prévus pour produire la tension de polarisation de la diode en fonction de la température.

6. Dispositif suivant la revendication 3, caractérisé en ce que le récepteur comprend une photodiode à avalanche au Silicium (13) ainsi que de moyens (14) prévus pour régler la tension de polarisation de la diode à une valeur prédéterminée de bruit propre dans le signal de sortie de la diode.

7. Dispositif suivant la revendication 3, caractérisé en ce que l'émetteur comprend un laser à diode (1) ainsi que des moyens (2) prévus pour le réglage en fonction de la température, la limitation et la stabilisation du courant de repos du laser à diode.

8. Dispositif suivant la revendication 7, pour la mise en œuvre du procédé suivant la revendication 2, caractérisé par un détecteur de puissance (56) disposé dans le canal récepteur et par un étage d'échantillonnage et de maintien alimenté par le détecteur de puissance, dont le signal de sortie commande le courant de repos du laser à diode (1).

9. Dispositif suivant la revendication 3, caractérisé par un intégrateur (33) qui est alimenté par le signal de sortie du mélangeur à double équilibrage (22) et un commutateur de valeur absolue (34) prévu pour adapter le signal intégré à la plage de commande du décaleur électronique de phase (20).

10. Dispositif suivant la revendication 7, caractérisé par un filtre interférentiel (12) adapté à la bande étroite d'émission du laser à diode (1) et disposé sur le trajet du rayon optique en amont du récepteur (13).

11. Dispositif suivant la revendication 3, caractérisé par un coin gris (6) disposé devant l'émetteur (1) sur le trajet du rayon optique, pour assurer le réglage de l'amplitude appropriée de signal pour le récepteur (13).

12. Dispositif suivant la revendication 3, caractérisé par un synthétiseur de fréquence (3) et un circuit de filtrage qui prélève par filtrage, pour la modulation de l'émetteur (1), une harmonique de la fréquence fondamentale du synthétiseur.

13. Dispositif suivant la revendication 12, caractérisé en ce que le synthétiseur de fréquence (3) et le circuit de filtrage produisent une série de fréquences de modulation différentes, situées dans la gamme des micro-ondes (en particulier autour de 450 MHz).

14. Dispositif suivant la revendication 13, caractérisé en ce que l'oscillateur auxiliaire (27) pour la conversion de fréquence est commandé par un circuit de réglage (31, 50, 51) de manière qu'il se forme toujours des signaux de référence convertis en fréquence d'une seule et même fréquence pour les différentes fréquences de modulation.

15. Dispositif suivant la revendication 13, caractérisé en ce que les moyens de détermination de la distance à mesurer comprennent un calculateur (29) avec lequel la distance à mesurer peut être calculée à partir des valeurs mesurées par le phasemètre (28) pour les différentes fréquences de modulation, et à partir de valeurs de température et de pression de l'air, et de pression de vapeur d'eau.

16. Dispositif suivant l'une des revendications 4, 13 et 15, caractérisé en ce que les moyens (5, 29) pour la détermination de la distance à mesurer sont construits et déterminés de telle manière que, par leur moyen, le système de trajet optique court soit ouvert par les moyens de commutation optiques (15, 16), une fréquence de modulation soit réglée au moyen du synthétiseur de fréquence (3), la différence temporelle entre le signal mesuré et le signal de référence soit enregistrée au moyen du phasemètre (28), ce processus puisse être répété pour le système du trajet de mesure et ensuite avec les autres fréquences de modulation pour le système de trajet court et de trajet de mesure et pour qu'au moyen du calculateur (29) la distance du mesure puisse être déterminée à partir des différences temporelles des signaux enregistrées.

Fig. 1

0 010 064

Fig. 2

0 010 064

Fig. 3

Fig. 5

Fig. 4